# EUROPEAN PATENT APPLICATION

(11) **EP 1 707 472 A1**
(43) Date of publication of application: **04.10.2006**
(21) Application number: 06006626.3
(22) Date of filing: 29.03.2006
(51) Int. Cl.: B62D 5/00

(54) **Variable steering ratio control apparatus with backlash adjustment structure**

(30) Priority: 31.03.2005 JP 2005100594
(71) Applicant: FUJI KIKO Co., Ltd., Kosai-shi, Shizuoka 431-0431 (JP)
(72) Inventor: Inoue, Kyoichi, Kosai-shi Shizuoka 431-0431 (JP)
(74) Representative: Grünecker, Kinkeldey, Stockmair & Schwanhäusser Anwaltssozietät

(57) **Abstract**

A variable steering ratio control apparatus includes a differential gear unit having a first (12) and a second (14) bevel gears fixedly connected to an input (11) and an output (13) shafts respectively, a third and a fourth bevel gears (21,22) respectively engaged with the first (12) and the second (14) bevel gears, and a differential gear casing (31) supporting the third and the fourth bevel gears (21,22) through gear supporting shafts (41,42), and a housing (51) separatable into a first housing (52) for rotatably supporting the second bevel gear (14) and the differential gear casing (31) and a second housing (55) for rotatably supporting the first bevel gear (12). The second housing (55) supporting the first bevel gear (12) moves toward the output shaft (13) by a position adjustment mechanism (55b,54a). The gear supporting shafts (41,42) supporting the third and the fourth bevel (21,22) gears also move toward the output shaft (13) in the differential gear casing (31) by virtue of the movement of the second housing (55).

## Description

### BACKGROUND OF THE INVENTION

The present invention relates to a steering control system which is equipped with a variable steering ratio control apparatus using a differential gear unit (or a differential gear mechanism), and more specially to a structure of the variable steering ratio control apparatus, which is capable of backlash adjustments.

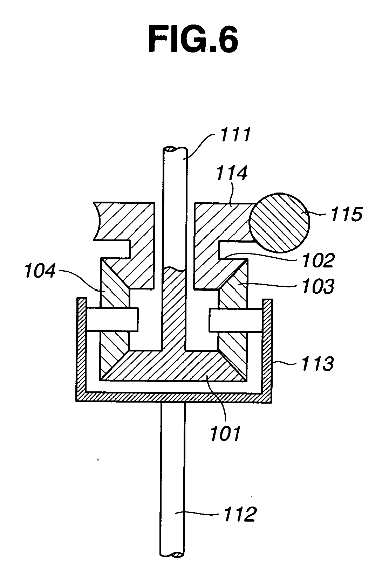

In recent years, there have been proposed and developed various steering control systems, each of which is equipped with a variable steering ratio control apparatus for varying a ratio between a rotation angle of a steering wheel and a turning angle of steered wheels according to a traveling mode of a vehicle. Japanese Patent Provisional Publication No. (Showa)47-20835 (hereinafter is referred to as "JP47-20835") has disclosed a variable steering ratio control apparatus which uses a differential gear unit for varying the ratio as shown in Fig. 6. The differential gear unit is arranged such that a shaft of a first bevel gear 101 is used as an input shaft 111 connected to a steering wheel (not shown), a second bevel gear 102 functioning as a steering angle increasing/decreasing shaft is coaxially aligned with the input shaft, each of the third and fourth bevel gears 103, 104 engaged with the first and the second bevel gears 101, 102 is rotatably supported by a carrier 113. A shaft of the carrier 113 is used as an output shaft 112 connected to a steering gear. A worm wheel 114 is fixedly formed with the second bevel gear 102 for transferring an assisting force by a motor (not shown) via a worm gear 115. The carrier 113, namely, the output shaft 112 is variably rotated with respect to the input shaft 111 by receiving the assisting force. In this variable steering ratio control apparatus, the steering ratio is therefore varied by way of controlling the motor according to a traveling mode, and thus the turning angle of the steered wheels with respect to the rotation angle of the steering wheel can be variably controlled.

On the other hand, another variable steering ratio control apparatus which uses a planetary gear unit for varying the steering ratio has been disclosed in Japanese Patent Provisional Publication No. 2003-312486 (hereinafter is referred to as "JP2003-312486"). In this variable steering ratio control apparatus as well, an output shaft is variably rotated by receiving an assisting force by a motor through a ring gear having a worm wheel. That is, the steering ratio is varied by a planetary gear mechanism having a sun gear, a plurality of pinions and the ring gear.

### SUMMARY OF THE INVENTION

However, in each of the above variable steering ratio control apparatuses in JP47-20835 and JP2003-312486, the differential gear unit or the planetary gear unit is used for varying the steering ratio. Because of this, there is a possibility that response lag in steering will arise due to backlash between gears. In JP2003-312486, in order to adjust the backlash, the sun gear is forced in an axial direction toward the pinions. And thus, these two gears mesh well. However, with regard to a ring gear-and-pinions mesh, even though the sun gear is forced toward the pinions, backlash in the ring gear-and-pinions mesh may remain. On the other hand, in the differential gear unit in JP47-20835, it may be possible to adjust backlash between the first bevel gear 101 and the third and fourth bevel gears 103, 104 in the same manner as JP2003-312486. However, with regard to backlash between the second bevel gear 102 and the third and fourth bevel gears 103, 104, since each position of axes (or shafts) of the third and fourth bevel gears 103, 104 is fixed, even though the first bevel gear 101 forces or presses the third and fourth bevel gears 103, 104 for adjusting the backlash between them, the third and fourth bevel gears 103, 104 do not move and do not press the second bevel gear 102. That is, the backlash between the second bevel gear 102 and the third and fourth bevel gears 103, 104 remains. Therefore, in this case as well, it is difficult to adjust the backlash between all the gears. In addition, even if the backlash between the second bevel gear 102 and the third and fourth bevel gears 103, 104 is adjusted by forcing the second bevel gear 102 by a different way, there is a possibility that a misalignment between the worm wheel 114 and worm gear 115 will occur by this adjustment.

It is therefore an object of the present invention to provide a structure of variable steering ratio control apparatus using a differential gear unit for adjusting backlash between all of the gears in the differential gear unit without the above misalignment between the worm wheel and the worm gear.

According to one aspect of the present invention, a variable steering ratio control apparatus comprises a differential gear unit comprising a first bevel gear fixedly connected to a steering input shaft, a second bevel gear fixedly connected to a steering output shaft coaxially aligned with the input shaft, a third and a fourth bevel gears rotatably supported by gear supporting shafts respectively for being in meshed-engagement with the first and the second bevel gears, and a differential gear casing supporting the gear supporting shafts of the third and the fourth bevel gears and rotatable about a common axis of the input and output shafts for varying a steering ratio, a worm wheel rotatable together with the differential gear casing and driven by a motor through a worm gear, a housing unit separatable into a first housing rotatably supporting the second bevel gear, the output shaft and the differential gear casing, and a second housing rotatably supporting the first bevel gear and the input shaft and axially movably engaged with the first housing in a manner so as to be movable in a direction of the common axis when assembling the first and second housing, a supporting mechanism for supporting the gear supporting shafts of the third and the fourth bevel gears movably in a direction of the common axis, a position adjustment mechanism formed in an engaging portion of the first and second housing, for permitting axial movement of the second housing relative to the first housing in the direction of the common axis while being engaged with the first housing through the engaging portion, and the supporting mechanism and the position adjustment mechanism are configured to cooperate with each other for backlash adjustment between each meshing pair of the four bevel gears.

According to another aspect of the invention, a variable steering ratio control apparatus comprises a differential gear unit comprising a first bevel gear fixedly connected to a steering input shaft, a second bevel gear fixedly connected to a steering output shaft coaxially aligned with the input shaft, a third and a fourth bevel gears rotatably supported by gear supporting shafts respectively for being in meshed-engagement with the first and the second bevel gears, and a differential gear casing supporting the gear supporting shafts of the third and the fourth bevel gears and rotatable about a common axis of the input and output shafts for varying a steering ratio, a worm wheel rotatable together with the differential gear casing and driven by a motor through a worm gear, a housing unit separatable into a first housing rotatably supporting the second bevel gear, the output shaft and the differential gear casing, and a second housing rotatably supporting the first bevel gear and the input shaft and axially movably engaged with the first housing in a manner so as to be movable in a direction of the common axis when assembling the first and second housing, supporting means for supporting the gear supporting shafts of the third and the fourth bevel gears movably in a direction of the common axis, relative-position adjustment means formed in an engaging portion of the first and second housing, for permitting axial movement of the second housing relative to the first housing in the direction of the common axis while being engaged with the first housing through the engaging portion, and the supporting means and the relative-position adjustment means are configured to cooperate with each other for backlash adjustment between each meshing pair of the four bevel gears by way of axial movement of each of the gear supporting shafts, caused by the axial movement of the second housing relative to the first housing, without affecting a meshed-engagement relationship between the worm wheel and the worm gear.

The other objects and features of this invention will become understood from the following description with reference to the accompanying drawings.

### BRIEF DESCRIPTION OF THE DRAWINGS

FIG. 1 is a longitudinal cross section showing a construction of a variable steering ratio control apparatus using differential gear unit according to a first embodiment of the present invention.

FIG. 2A is a longitudinal cross section showing an essential part of the variable steering ratio control apparatus.

FIG. 2B is a sectional view showing a structure of the essential part of the variable steering ratio control apparatus, when taken along a line 2B-2B of FIG. 2A.

FIG. 3 is a longitudinal cross section explaining a state before a second housing of the variable steering ratio control apparatus is connected to a first housing.

FIG. 4 is a longitudinal cross section showing a sate after the second housing is connected and screwed into the first housing.

FIG. 5 is a longitudinal cross section showing a construction of a variable steering ratio control apparatus using differential gear unit according to a second embodiment.

FIG. 6 is a longitudinal cross section showing a construction of a variable steering ratio control apparatus using differential gear unit according to a conventional technology.

### DETAILED DESCRIPTION OF THE INVENTION

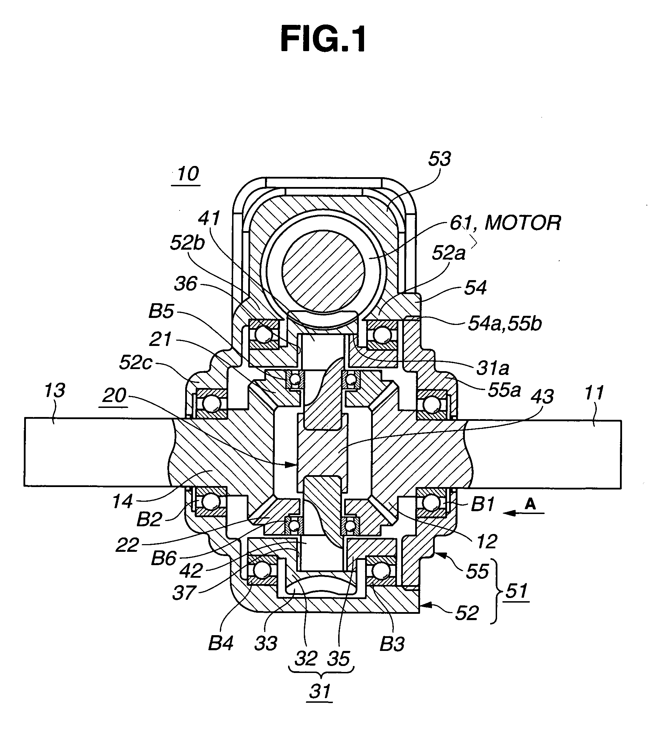

The present invention will be explained below with reference to the drawings. Firstly, referring now to Figs. 1 to 4, there are shown a variable steering ratio control apparatus using a differential gear unit in accordance with a first embodiment.

Fig. 1 shows a construction of a variable steering ratio control apparatus 10 using a differential gear unit. Differential gear unit includes four gears: a first and a second bevel gears 12, 14, a third and a fourth bevel gears 21, 22. First bevel gear 12 is fixedly connected to an end of a steering input shaft 11. The other end of the input shaft 11 is connected to a steering wheel (not shown). Second bevel gear 14 is fixedly connected to an end of a steering output shaft 13. The other end of the output shaft 13 is connected to a steering gear such as rack-and-pinion steering gear (not shown) to cause steered wheels to turn. Second bevel gear 14 is coaxially aligned with first bevel gear 12. Third and fourth bevel gears 21, 22 are rotatably meshed or engaged with first and second bevel gears 12, 14 respectively. Further, third and fourth bevel gears 21, 22 are supported and disposed in a differential gear casing 31 such that third and fourth bevel gears 21, 22 rotate about an axis orthogonal to an axis of the input and output shafts 11, 13. As regards the above bevel gears, straight bevel gears or spiral bevel gears may be used instead of the bevel gears.

Differential gear casing 31 functions as a steering increasing/decreasing shaft (or simply, a steering varying shaft). A worm wheel 33 is disposed in the middle of the differential gear casing 31, and meshes or engages with a worm gear 61 which is disposed around differential gear casing 31. Worm wheel 33 is rotated by a motor through worm gear 61. As input shaft 11 rotates, output shaft 13 also variably rotates by receiving an assisting force from the motor. In this case, although output shaft 13 rotates in a rotational direction opposite to that of the input shaft 11, the steering gear connected to output shaft 13 is set such that a steering direction and a turning direction of the steered wheels are the same.

Each of the input and output shafts 11, 13 (each of the first and second bevel gears 12, 14) is rotatably supported by a housing 51 (or a housing unit 51) through bearings B1, B2. Differential gear casing 31 is rotatably supported by housing 51 through bearings B3, B4 inside of the housing 51 (that is, differential gear casing 31 is rotatable about a common axis of the input and output shafts 11, 13). Each of the third and the fourth bevel gears 21, 22 is rotatably supported by gear supporting shafts 41, 42 through bearings B5, B6. In more detail, gear supporting shafts 41, 42 are connected to each other via a connecting member 43. And further, each of the gear supporting shafts 41, 42 is inserted into rectangular supporting holes or grooves 36, 37 formed inside of the worm wheel 33 such that gear supporting shafts 41, 42 are supported and movable only in a direction shown by the arrow A of Fig. 1 (i.e. in a direction of the common axis of the input and output shafts 11, 13). That is, a third-and-fourth bevel gears assembly 20 including the above third and fourth bevel gears 21, 22, gear supporting shafts 41, 42, connecting member 43 and bearings B5, B6 is supported by the above rectangular supporting holes 36, 37 through gear supporting shafts 41, 42, and gear supporting shafts 41, 42 can shift in and along the supporting holes 36, 37 of differential gear casing 31 in the axial direction of the input and output shafts 11, 13 (in the direction of the common axis of the input and output shafts 11, 13). Or conversely, supporting holes 36, 37 is formed into a substantially rectangular shape (i.e. rectangular in cross section) such that gear supporting shafts 41, 42 can shift in the supporting holes 36, 37.

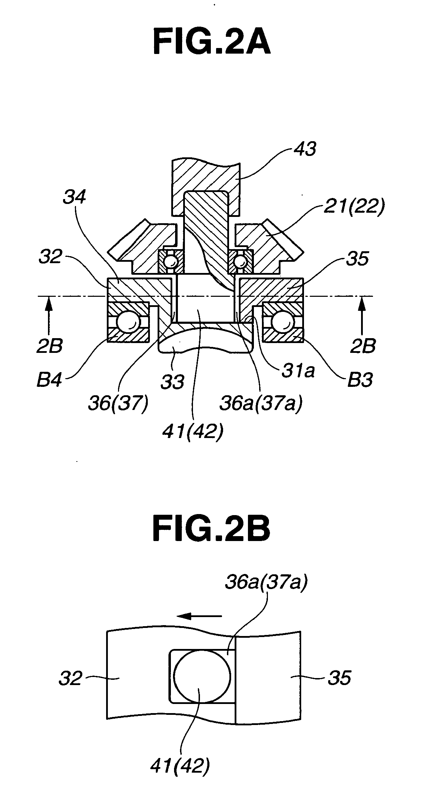

Differential gear casing 31 is separatable into a first differential gear casing portion 32 (simply, a first gear casing portion 32) and a second differential gear casing portion 35 (simply, a second gear casing portion 35) so as to insert gear supporting shafts 41, 42 into the supporting holes 36, 37. That is, second gear casing portion 35 is attachable to first gear casing portion 32. As explained in more detail, as shown in Figs. 2A and 2B, second gear casing portion 35 can be separated from first gear casing portion 32 at the same surface 31a as a peripheral surface of supporting holes 36, 37. First gear casing portion 32 has a bearing supporting portion 34 for receiving or engaging with bearing B4 (and also for receiving or engaging with worm wheel 33 at a portion integrally formed with bearing supporting portion 34) and recessed portions 36a, 37a. Each of the recessed portions 36a, 37a opens toward a center of the differential gear casing 31 and toward second gear casing portion 35. And then, each of the supporting holes 36, 37 is defined by attaching or connecting second gear casing portion 35 to first gear casing portion 32. In other words, first gear casing portion 32 is closed by second gear casing portion 35, thus each of the supporting holes 36, 37 is defined and formed into the substantially rectangular shape.

As shown in Figs. 1, 3 and 4, housing 51 (housing unit 51) is also separatable into a first housing 52 and a second housing 55 in order to house third-and-fourth bevel gears assembly 20 and bearing B3 etc. and also in order to adjust backlash between all the bevel gears 12, 14, 21 and 22. Third-and-fourth bevel gears assembly 20 etc. are inserted from the direction of the arrow A (simply, the direction A) into first housing 52. First housing 52 has three bearing supporting portions 52a, 52b and 52c for respectively receiving or engaging with bearings B3, B4 and B2, and a motor-and-worm gear supporting portion 53 for housing the motor and worm gear 61, and further a second housing-engaging portion 54 for engaging or connecting second housing 55. An interior space or a hole in which third-and-fourth bevel gears assembly 20 etc. are housed is defined by being surrounded with bearing supporting portions 52a, 52b, 52c and second housing-engaging portion 54. A circumferential interior surface of the hole around bearing supporting portion 52a and a circumferential interior surface around second housing-engaging portion 54 are the same surface. That is, the circumferential interior surface extends continuously from an inside of the second housing-engaging portion 54 to an inside of the bearing supporting portion 52a in a direction that inserts second housing 55. Second housing-engaging portion 54 is formed with a threaded hole 54a on the circumferential interior surface around an end portion of second housing-engaging portion 54.

As regarding the second housing 55, second housing 55 has a bearing supporting portion 55a for receiving or engaging with bearing B1 at a center thereof. In addition, second housing 55 is formed with a thread 55b (as a male screw-threaded portion) on an outer periphery thereof in order to screw onto threaded hole 54a (as a female screw-threaded portion) of second housing-engaging portion 54.

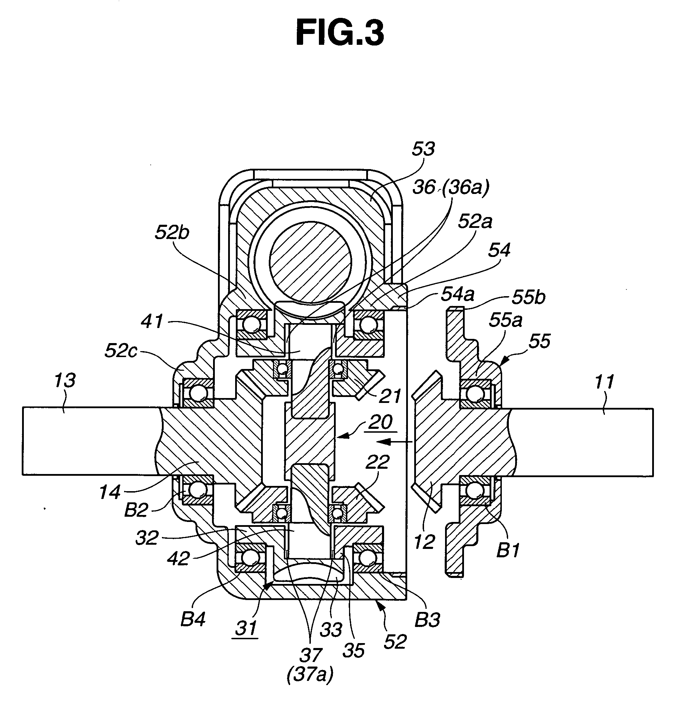

Next, an installation of the bevel gears etc. into housing 51 will be explained below. As shown in Fig. 3, the installation takes place under a condition where second housing 55 is removed. Firstly, output shaft 13 fixedly connected to second bevel gear 14 is mounted through bearing B2.

Secondly, preassembled third-and-fourth bevel gears assembly 20 and differential gear casing 31 are assembled before these are mounted. As mentioned above, as shown in Figs. 2A and 2B, gear supporting shafts 41, 42 of the preassembled third-and-fourth bevel gears assembly 20 is inserted into recessed portions 36a, 37a of first gear casing portion 32 respectively, and then second gear casing portion 35 is engaged with first gear casing portion 32.

Thirdly, the above differential gear casing 31 with third-and-fourth bevel gears assembly 20 is mounted at a proper position through bearings B3, B4 such that both of the third and fourth bevel gears 21, 22 of third-and-fourth bevel gears assembly 20 engage or mesh with second bevel gear 14 fixedly connected to output shaft 13.

And lastly, as can be seen in Fig. 3, preassembled second housing 55 having input shaft 11 (also first bevel gear 12) is connected to first housing 52 such that first bevel gear 12 engages or meshes with third and fourth bevel gears 21, 22. When connected, thread 55b of second housing 55 screws onto threaded hole 54a of first housing 52. Accordingly, the variable steering ratio control apparatus 10 with differential gear unit is assembled as shown in Fig. 1.

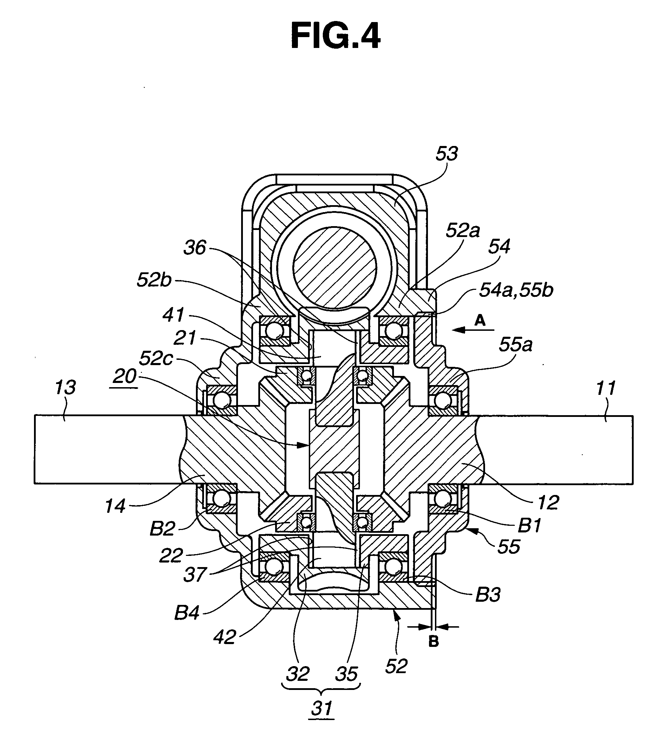

Next, backlash adjustment between all the bevel gears 12, 14, 21 and 22 will be explained. In the assembled variable steering ratio control apparatus shown in Fig. 1, thread 55b of second housing 55 screws further onto threaded hole 54a of first housing 52 such that second housing 55 moves in the direction A by a displacement B. This state is shown in Fig. 4. As second housing 55 moves, input shaft 11 and first bevel gear 12 also move in the direction A. First bevel gear 12 therefore presses third and fourth bevel gears 21, 22 in the direction A. At this time, since gear supporting shafts 41, 42 supporting third and fourth bevel gears 21, 22 are movable in the rectangular supporting holes 36, 37 in the axial direction of the input and output shafts 11, 13, third and fourth bevel gears 21, 22 also move in the direction A and press second bevel gear 14. In more detail, since gear supporting shafts 41, 42 are connected to each other via the connecting member 43, third and fourth bevel gears 21, 22 are equally pressed by first bevel gear 12, and equally press second bevel gear 14. Or conversely, third and fourth bevel gears 21, 22 are equally pressed against second bevel gear 14. Accordingly, all the bevel gears 12, 14, 21 and 22 mesh well.

As discussed above, the second housing can move by the thread of the second housing and the threaded hole of the first housing (a position adjustment mechanism), and the gear supporting shafts are supported and can slide or move in the supporting holes by virtue of the movement of the second housing (a supporting mechanism). All the bevel gears therefore mesh well. That is, in the variable steering ratio control apparatus, it is possible to adjust the backlash between all the bevel gears by adjusting a tightening amount of the second housing. And further, when adjusting, even though third and fourth bevel gears 21, 22 move in the direction A, differential gear casing 31 having worm wheel 33 does not move in the direction A. Therefore, an alignment between worm wheel 33 and worm gear 61 is unaffected by this backlash adjustment. That is, tooth engagement between worm wheel 33 and worm gear 61 can be held without occurrence of a misalignment.

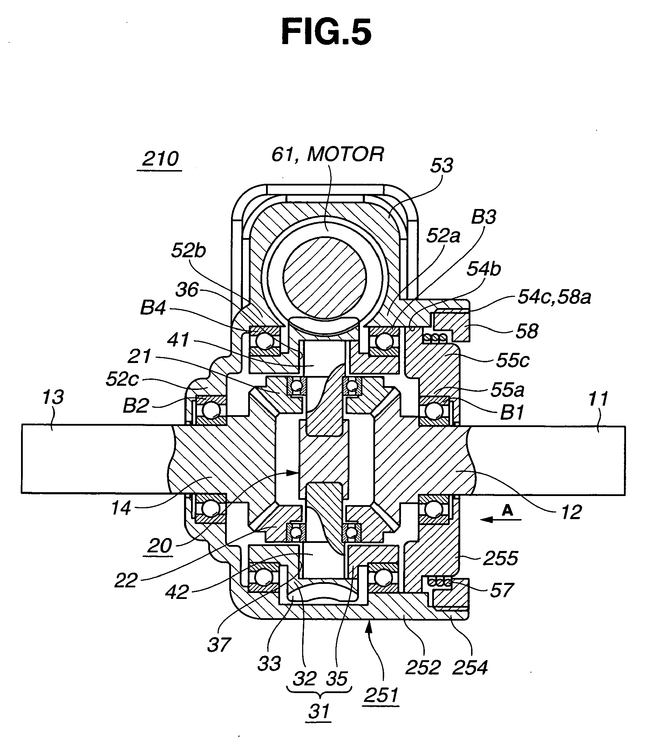

Next, a second embodiment of the present invention will be explained with reference to Fig. 5. A variable steering ratio control apparatus 210 using a differential gear unit of the second embodiment is structurally similar to that of the first embodiment, except for a first-and-second housing connection. In Fig. 5, different portions of the first-and-second housing connection are denoted by different reference numbers from that of Fig. 1.

A housing 251 has a first housing 252 and a second housing 255. That is, housing 251 is separatable into first housing 252 and second housing 255 in the same manner as the first embodiment. First housing 252 has three bearing supporting portions 52a, 52b and 52c for respectively receiving or engaging with bearings B3, B4 and B2, and a motor-and-worm gear supporting portion 53 for housing a motor and a worm gear 61, and further a second housing-engaging portion 254 for engaging or connecting second housing 255. Second housing 255 is fitted into second housing-engaging portion 254 (into a supporting hole 54b of second housing-engaging portion 254, described next) such that second housing 255 can move in the direction A. Second housing-engaging portion 254 is formed with the supporting hole 54b defined by being surrounded with a circumferential interior surface of second housing-engaging portion 254. And further, second housing-engaging portion 254 is formed with a threaded hole 54c on a circumferential interior surface around an end portion of second housing-engaging portion 254 in order for a nut 58, whose diameter is larger than that of supporting hole 54b, to screw on.

Second housing 255 has a bearing supporting portion 55a for receiving or engaging with a bearing B1 at a center thereof, and a shoulder portion 55c at a periphery thereof.

Next, an installation of the bevel gears etc. into housing 251 will be explained below. In the same manner as the first embodiment, an output shaft 13 fixedly connected to a second bevel gear 14 is mounted through a bearing B2. And, a differential gear casing 31 with a third-and-fourth bevel gears assembly 20 is mounted through bearings B3, B4 such that both of the third and fourth bevel gears 21, 22 of third-and-fourth bevel gears assembly 20 engage or mesh with second bevel gear 14. And then, preassembled second housing 255 having an input shaft 11 (also a first bevel gear 12) is inserted into supporting hole 54b of first housing 252 such that first bevel gear 12 fixedly connected to input shaft 11 engages or meshes with third and fourth bevel gears 21, 22. After second housing 255 is inserted, a coil spring 57 is attached to shoulder portion 55c of second housing 255, and nut 58 is screwed onto threaded hole 54c of first housing 252 while pushing coil spring 57 in a direction A by a flange portion 58a of nut 58. Accordingly, the variable steering ratio control apparatus 210 with differential gear unit is assembled as shown in Fig. 5.

Next, backlash adjustment between all the bevel gears will be explained. In the variable steering ratio control apparatus 210 with differential gear unit, as nut 58 screws further onto threaded hole 54c of first housing 252, second housing 255 and also first bevel gear 12 move in the direction A via coil spring 57. When moving, first bevel gear 12 presses third and fourth bevel gears 21, 22 in the direction A by way of a force of coil spring 57. At this time, since gear supporting shafts 41, 42 supporting third and fourth bevel gears 21, 22 are connected to each other and movable in rectangular supporting holes 36, 37 in the axial direction of the input and output shafts 11, 13, third and fourth bevel gears 21, 22 also move in the direction A and equally press second bevel gear 14. Or conversely, third and fourth bevel gears 21, 22 are equally pressed against second bevel gear 14 through the force of coil spring 57. Accordingly, all the bevel gears 12, 14, 21 and 22 mesh well.

As explained above, in the variable steering ratio control apparatus, it is possible to adjust the backlash between all the bevel gears by adjusting a tightening amount of nut 58 screwed onto threaded hole 54c of first housing 252. In this case as well, tooth engagement between worm wheel and worm gear can be held without occurrence of a misalignment. In addition, coil spring 57 is provided and compressed between second housing 255 and nut 58, and second housing 255 is pre-loaded toward first housing 252, therefore, gear engagement between all the bevel gears can be kept in a state where the backlash is adjusted during assembly of the variable steering ratio control apparatus even after a long-term use. Further, even if there occurs abrasion or wear of gear tooth from long use, the backlash is adjusted by way of the force of the coil spring 57.

In the above embodiments, the backlash is adjusted by adjusting an amount of shift of the second housing toward the output shaft (or by adjusting a connecting position of the second housing relative to the first housing). As discussed above, in the first embodiment, the screw-on second housing 55 (i.e. thread 55b of second housing 55 and threaded hole 54a of first housing 52) is used as a position adjustment mechanism. In the second embodiment, the screw-on nut 58 and the coil spring 57 disposed between the nut and the second housing (also threaded hole 54c of first housing 252) are used as the position adjustment mechanism for shifting or moving the second housing. However, structure or configuration of the embodiments is not limited, these can be modified. For instance, in Fig. 1, in order to permanently pull the second housing toward the output shaft, a pull-back spring can be provided between second housing 55 and differential gear casing 31. One end of the pull-back spring is connected to second housing-engaging portion 54, and the other end of the pull-back spring is connected to second housing 55 so that only second housing 55 is forced by the pull-back spring (i.e. differential gear casing 31 is not forced by the pull-back spring) and is pulled toward the output shaft. In this case, even if looseness of second housing 55 (the thread 55b) should arise from vibration, it can be prevented. Furthermore, instead of moving the second housing, it is possible to move the first housing. In this case, the second bevel gear presses the third and fourth bevel gears, and the third and fourth bevel gears are pressed against the first bevel gear. The backlash is therefore adjusted.

In addition, with regard to the gear supporting shaft, its end portion where the gear supporting shaft is received or supported in the supporting hole is substantially circular in cross section in the embodiments, as can be seen from the shape of gear supporting shaft 41 (42) in Fig. 2B. In this case, the gear supporting shaft can easily shift in and along the supporting hole. Further, as for the supporting hole, it is substantially rectangular in cross section. However, these shapes are not limited, at least these are formed so that the supporting shaft can slide or move only in the direction A in the supporting hole. Thus, the end portion of the gear supporting shaft received in the supporting hole can be rectangular or oval in cross section. In these cases, the gear supporting shaft can not rotate in the supporting hole. Therefore, an undesirable deflection or wobble of the gear supporting shaft, which may arise from vibration and may cause the backlash between the bevel gears, is prevented.

This application is based on a prior Japanese Patent Application No. 2005-100594 filed on March 31, 2005. The entire contents of this Japanese Patent Application No. 2005-100594 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A variable steering ratio control apparatus comprising:
a differential gear unit comprising a first bevel gear (12) fixedly connected to a steering input shaft (11), a second bevel gear (14) fixedly connected to a steering output shaft (13) coaxially aligned with the input shaft (11), a third and a fourth bevel gears (21, 22) rotatably supported by gear supporting shafts (41, 42) respectively for being in meshed-engagement with the first and the second bevel gears (12, 14), and a differential gear casing (31) supporting the gear supporting shafts (41, 42) of the third and the fourth bevel gears (21, 22) and rotatable about a common axis of the input and output shafts (11, 13) for varying a steering ratio;
a worm wheel (33) rotatable together with the differential gear casing (31) and driven by a motor through a worm gear (61);
a housing unit (51) separatable into a first housing (52) rotatably supporting the second bevel gear (14), the output shaft (13) and the differential gear casing (31), and a second housing (55) rotatably supporting the first bevel gear (12) and the input shaft (11) and axially movably engaged with the first housing (52) in a manner so as to be movable in a direction of the common axis when assembling the first and second housing (52, 55);
a supporting mechanism (36, 37) for supporting the gear supporting shafts (41, 42) of the third and the fourth bevel gears (21, 22) movably in a direction of the common axis;
a position adjustment mechanism (55b, 54a; 54c, 58, 57) formed in an engaging portion (54) of the first and second housing (52, 55), for permitting axial movement of the second housing (55) relative to the first housing (52) in the direction of the common axis while being engaged with the first housing (52) through the engaging portion (54); and
the supporting mechanism (36, 37) and the position adjustment mechanism (55b, 54a; 54c, 58, 57) being configured to cooperate with each other for backlash adjustment between each meshing pair of the four bevel gears (12, 14, 21, 22).

2. The variable steering ratio control apparatus as claimed in claim 1, wherein:
the position adjustment mechanism comprises a thread (55b) formed on an outer periphery of the second housing (55) and a threaded hole (54a) formed in the engaging portion (54) for receiving and engaging the thread (55b) of the second housing (55).

3. The variable steering ratio control apparatus as claimed in claim 1, wherein:
the position adjustment mechanism comprises a threaded hole (54c) formed in the engaging portion (254), a nut (58) screwing onto the threaded hole (54c) of the engaging portion (254) and a spring (57) disposed between the nut (58) and the second housing (255).

4. The variable steering ratio control apparatus as claimed in claim 1, wherein:
the gear supporting shafts (41, 42) of the third and the fourth bevel gears (21, 22) are connected to each other.

5. The variable steering ratio control apparatus as claimed in claim 1, wherein:
the supporting mechanism comprises supporting grooves (36, 37) in the differential gear casing (31) for axially movably supporting the gear supporting shafts (41, 42).

6. The variable steering ratio control apparatus as claimed in claim 5, wherein:
an end portion of the gear supporting shaft (41, 42) received in the supporting groove (36, 37) is substantially circular in cross section.

7. The variable steering ratio control apparatus as claimed in claim 5, wherein:
an end portion of the gear supporting shaft (41, 42) received in the supporting groove (36, 37) is substantially oval in cross section.

8. The variable steering ratio control apparatus as claimed in claim 5, wherein:
an end portion of the gear supporting shaft (41, 42) received in the supporting groove (36, 37) is substantially rectangular in cross section.

9. A variable steering ratio control apparatus comprising:
a differential gear unit comprising a first bevel gear (12) fixedly connected to a steering input shaft (11), a second bevel gear (14) fixedly connected to a steering output shaft (13) coaxially aligned with the input shaft (11), a third and a fourth bevel gears (21, 22) rotatably supported by gear supporting shafts (41, 42) respectively for being in meshed-engagement with the first and the second bevel gears (12, 14), and a differential gear casing (31) supporting the gear supporting shafts (41, 42) of the third and the fourth bevel gears (21, 22) and rotatable about a common axis of the input and output shafts (11, 13) for varying a steering ratio;
a worm wheel (33) rotatable together with the differential gear casing (31) and driven by a motor through a worm gear (61);
a housing unit (51) separatable into a first housing (52) rotatably supporting the second bevel gear (14), the output shaft (13) and the differential gear casing (31), and a second housing (55) rotatably supporting the first bevel gear (12) and the input shaft (11) and axially movably engaged with the first housing (52) in a manner so as to be movable in a direction of the common axis when assembling the first and second housing (52, 55);
supporting means (36, 37) for supporting the gear supporting shafts (41, 42) of the third and the fourth bevel gears (21, 22) movably in a direction of the common axis;
relative-position adjustment means (55b, 54a; 54c, 58, 57) formed in an engaging portion (54) of the first and second housing (52, 55), for permitting axial movement of the second housing (55) relative to the first housing (52) in the direction of the common axis while being engaged with the first housing (52) through the engaging portion (54); and
the supporting means (36, 37) and the relative-position adjustment means (55b, 54a; 54c, 58, 57) being configured to cooperate with each other for backlash adjustment between each meshing pair of the four bevel gears (12, 14, 21, 22) by way of axial movement of each of the gear supporting shafts (41, 42), caused by the axial movement of the second housing (55) relative to the first housing (52), without affecting a meshed-engagement relationship between the worm wheel (33) and the worm gear (61).

10. The variable steering ratio control apparatus as claimed in claim 9, wherein:
the second housing (55) is screw-threaded into the first housing (52) to create the axial movement of the second housing (55) relative to the first housing (52) for backlash adjustment.

11. The variable steering ratio control apparatus as claimed in claim 10, wherein:
the relative-position adjustment means comprises a male screw-threaded portion (55b) formed on an outer periphery of the second housing (55) and a female screw-threaded portion (54a) formed in the engaging portion formed in the first housing (52).

12. The variable steering ratio control apparatus as claimed in claim 9, wherein:
the second housing (55) is pre-loaded toward the first housing (52) to create the axial movement of the second housing (55) relative to the first housing (52) for automatic backlash adjustment.

13. The variable steering ratio control apparatus as claimed in claim 12, wherein:
the relative-position adjustment means comprises a nut (58) connected to the engaging portion formed in the first housing (52), and a preload means (57) disposed between the nut (58) and the second housing (255).
